# EUROPEAN PATENT SPECIFICATION

(11) **EP 3 157 213 B1**
(45) Date of publication and mention of the grant of the patent: **28.10.2020**
(21) Application number: 14894559.5
(22) Date of filing: 25.09.2014
(51) Int. Cl.: H04L 12/927, H04L 12/877, H04L 12/869

(54) **SPEED LIMITATION METHOD AND DEVICE FOR HIERARCHICAL QUALITY OF SERVICE QUEUE, AND COMPUTER STORAGE MEDIUM**
GESCHWINDIGKEITSBEGRENZUNGSVERFAHREN UND VORRICHTUNG FÜR HIERARCHISCHE DIENSTQUALITÄTSWARTESCHLANGE UND COMPUTERSPEICHERMEDIUM
PROCÉDÉ ET DISPOSITIF DE LIMITATION DE VITESSE POUR FILE D'ATTENTE À QUALITÉ DE SERVICE HIÉRARCHIQUE, ET SUPPORT DE STOCKAGE INFORMATIQUE

(30) Priority: 12.06.2014 CN 201410261060
(43) Date of publication of application: 19.04.2017
(73) Proprietor: ZTE Corporation, Shenzhen, Guangdong 518057 (CN)
(72) Inventor: XU, Xiaochun, Shenzhen Guangdong 518057 (CN)
(74) Representative: Aipex B.V.
(86) International application number: PCT/CN2014/087433
(87) International publication number: WO 2015/188518

(56) References cited:
- WO-A1-2013/023494
- CN-A- 102 158 391
- CN-A- 103 200 124
- CN-A- 103 249 091
- US-A1- 2006 193 256
- US-B1- 8 194 690
- CHIUSSI F M ET AL: "Implementing fair queueing in ATM switches: the discrete-rate approach", INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, vol. 1, 29 March 1998 (1998-03-29), pages 272-281, XP010270291, DOI: 10.1109/INFCOM.1998.659663 ISBN: 978-0-7803-4383-2
- CHARNY A: "Hierarchical relative error scheduler: an efficient traffic shaper for packet switching networks", NETWORK AND OPERATING SYSTEM SUPPORT FOR DIGITAL AUDIO AND VIDEO, 1997 ., PROCEEDINGS OF THE IEEE 7TH INTERNATIONAL WORKSHOP ON ST. LOUIS, MO, USA 19-21 MAY 1997, IEEE, NEW YORK, NY, USA, 19 May 1997 (1997-05-19), pages 267-278, XP010251705, DOI: 10.1109/NOSDAV.1997.629394 ISBN: 978-0-7803-3799-2
- JEAN-PASCAL BILLAUD ET AL: "hClock", COMPUTER SYSTEMS, ACM, 2 PENN PLAZA, SUITE 701 NEW YORK NY 10121-0701 USA, 15 April 2013 (2013-04-15), pages 309-322, XP058015576, DOI: 10.1145/2465351.2465382 ISBN: 978-1-4503-1994-2

## Description

### TECHNICAL FIELD

The present disclosure relates to a technical field of network devices, and particularly to a method and apparatus for conducting rate limiting on a hierarchical quality of service queue and a computer storage medium.

### BACKGROUND

With rapid development of a computer network, more and more important data, such as bandwidth, delay, jitter sensitive voice, image, etc., are transmitted on the network. In order to provide different promises and guarantees for data transmission performance, a quality of service (QoS) technology is widely used to guarantee quality of network transmission.

With expansion of a user scale and increase of service types, an Ethernet device is required to not only further refine and distinguish service traffic, but also conduct hierarchical scheduling on transmission with a number of users, a variety of services and a variety of traffic. Apparently, with respect to the traditional QoS technology, these applications are hard to be realized.

In order to achieve a purpose of hierarchical scheduling, by means of a hierarchical quality of service (HQoS) technology, a scheduling policy is assembled into a hierarchical tree structure. Nodes in the tree structure have three types of a root node, branch nodes and leaf nodes. The root node is a convergence point of traffic and corresponds to a scheduler. Each of the branch nodes at an intermediate layer corresponds to a scheduler respectively. Each of the leaf nodes at the bottom layer corresponds to a scheduling queue respectively.

In a general hierarchical structure, a cascading port corresponds to a root node, and two leaf nodes generally exist at the bottom layer and correspond to two queues, one of which is a unicast queue, and the other is a multicast queue. In general, the unicast queue and the multicast queue are managed through different registers respectively. However, the disadvantage of such structure is that: since a sum of rate limits of the unicast queue and the multicast queue cannot exceed a rate limit of a common father node of the two leaf nodes, a situation where a bandwidth of one queue is not sufficient and there remains residue on a bandwidth of the other queue may occur if rate limiting is conducted on the unicast queue and the multicast queue separately when unicast and multicast service traffic are unstable. As a result, user experience may be greatly deteriorated.

A hierarchical node structure used for a scheduling function is disclosed in a US patent (US8194690B1). As shown in FIG.2, first level nodes 40 may be queues; top level nodes 42 may be streams; and the in-between levels 28, 30 contain sub-port nodes and port nodes respectively. Each of the sub-port 28, port 30 and stream 42 nodes has a rate limiter on its output. The rate limiter enforces a maximum rate averaged over a time window for a set of packets. Moreover, each of the queue nodes 40 has a rate shaper on its output. The rate shaper distributes the set of packets within a time window, for example in an even distribution, while also enforcing a maximum rate.

A method and system for shaping traffic in a multi-level queuing hierarchy are disclosed in a US application (US2006193256A1). The hierarchy includes a high priority channel and a low priority channel, wherein traffic on the low priority channel is fragmented and interleaved with traffic from the high priority channel and traffic combined from the high priority and low priority channels has a maximum shape rate. The method includes linking a high priority token bucket to a low priority token bucket, transmitting data from the high priority channel, and decrementing the low priority token bucket by an amount corresponding to the data transmitted. Data is transmitted from the low priority channel only if the low priority bucket has available tokens.

A non-patent literature "Implementing fair queueing in ATM switches: the discrete-rate approach" discloses a discrete rate GPS-(Generalized Processor Sharing) related scheduler which does not require the computation and storage of one timestamp per connection, and only maintains a single timestamp per rate. The elimination of the per-connection timestamps has no negative effect on delay bounds.

A non-patent literature "Hierarchical relative error scheduler: an efficient traffic shaper for packet switching networks" discloses a hierarchical relative error scheduler (HRE) which can be used as an efficient traffic shaper with deterministic bandwidth and delay guarantees which hold even in the presence of dynamic rate changes.

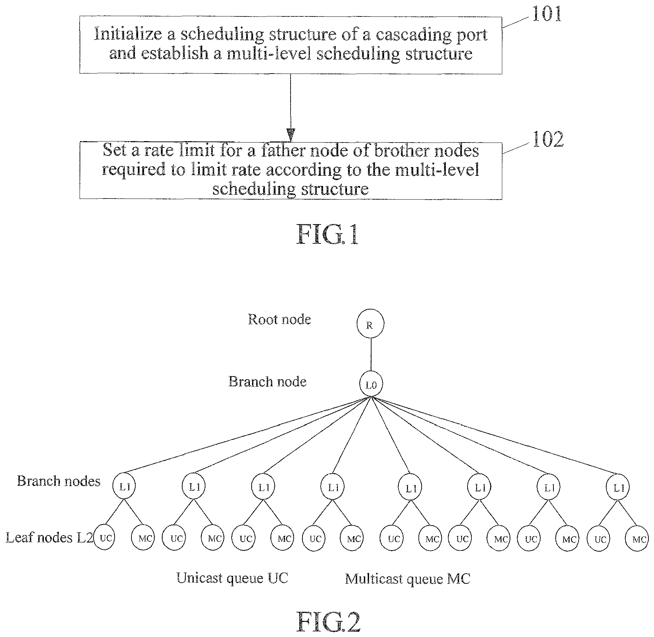

A non-patent literature "hClock" discloses a design and implementation of a hierarchical bandwidth allocation algorithm called hClock. hClock is able to enforce hierarchical controls for a variety of workloads with diverse traffic patterns at scale. The model for implementing hClock is shown in FIG. 2(B), and should meet the following properties at every level: (1) Every node gets at least its reservation, (2) Every node gets at most its limit.

### SUMMARY

In order to solve the existing technical problems, embodiments of the present invention provide a method and apparatus for conducting rate limiting on a hierarchical quality of service queue and a computer storage medium, which can realize reasonable rate limiting of a unicast queue and a multicast queue under the same branch node, thereby improving user experience.

A technical solution in the embodiments of the present invention is realized as follows.

An embodiment of the present invention provides a method for conducting rate limiting on a hierarchical quality of service queue, including:
initializing a scheduling structure of a cascading port and establishing a multi-level scheduling structure, and
setting a rate limit for a father node of two brother nodes required to limit rate according to the multi-level scheduling structure;
one of the two brother nodes corresponds to a unicast queue, and the other one of the two brother nodes corresponds to a multicast queue.

In the above solution, the step of establishing a multi-level scheduling structure includes: establishing a multi-level scheduling structure including a root node, branch nodes and leaf nodes.

In the above solution, the method further includes: recording hardware indexes of a root node corresponding to the cascading port, branch nodes and leaf nodes respectively.

In the above solution, the step of setting a rate limit for a father node of two brother nodes required to limit rate includes: according to the multi-level scheduling structure and the recorded hardware indexes of the root node corresponding to the cascading port, the branch nodes and the leaf nodes, setting a rate limit for the father node of the two brother leaf nodes required to limit rate.

In the above solution, the step of setting a rate limit includes: setting rate limit for a hardware entry rate limit register of the node.

An embodiment of the present invention further provides an apparatus for conducting rate limiting on a hierarchical quality of service queue, including:
a scheduling structure establishing unit, configured to initialize a scheduling structure of a cascading port and establish a multi-level scheduling structure, and
a rate limit setting unit, configured to set a rate limit for a father node of two brother nodes required to limit rate according to the multi-level scheduling structure, where one of the two brother nodes corresponds to a unicast queue, and the other one of the two brother nodes corresponds to a multicast queue.

In the above solution, the scheduling structure establishing unit is configured to establish a multi-level scheduling structure including a root node, branch nodes and leaf nodes.

In the above solution, the apparatus further includes a storage unit configured to record hardware indexes of the root node corresponding to the cascading port, the branch nodes and the leaf nodes respectively.

In the above solution, the rate limit setting unit is configured to set, according to the multi-level scheduling structure and the recorded hardware indexes of the root node corresponding to the cascading port, the branch nodes and the leaf nodes, a rate limit for the father node of the two brother leaf nodes required to limit rate.

In the above solution, the rate limit setting unit is configured to set a rate limit for a hardware entry rate limit register of the node.

An embodiment of the present invention further provides a computer storage medium storing computer executable instructions that are used for executing the above method for conducting rate limiting on a hierarchical quality of service queue.

According to the method and apparatus for conducting rate limiting on a hierarchical quality of service queue and a computer storage medium provided by the embodiments of the present invention, firstly, a scheduling structure of a cascading port is initialized, and a multi-level scheduling structure is established; and then, a rate limit is set for a father node of two brother nodes required to limit rate according to the multi-level scheduling structure. In this way, a situation that, when rate limiting is conducted on a unicast queue and a multicast queue corresponding to each leaf node individually, a bandwidth of one queue is not sufficient while there is residue on a bandwidth of the other queue due to unstable service traffic, is avoided, thereby realizing reasonable rate limiting of a unicast queue and a multicast queue under the same branch node. Therefore, user experience is improved.

### BRIEF DESCRIPTION OF DRAWINGS

Fig. 1 is a schematic flow diagram showing a method for conducting rate limiting on a hierarchical quality of service queue provided by the embodiments of the present invention;
Fig. 2 is a schematic diagram showing a multi-level scheduling structure provided by the embodiments of the present invention;
Fig. 3 is a schematic diagram showing a method for conducting rate limiting on a unicast queue and a multicast queue in a traditional solution;
Fig. 4 is a schematic diagram showing a method for conducting rate limiting on a unicast queue and a multicast queue provided by the embodiments of the present invention; and
Fig. 5 is a schematic structural diagram showing an apparatus for conducting rate limiting on a hierarchical quality of service queue provided by the embodiments of the present invention.

### DETAILED DESCRIPTION

At present, when a user application conducts rate limiting and conducts memory allocation by a memory management unit (MMU), it is only taken into account that a sum of rate limits of a unicast queue (UC) and a multicast queue (MC) cannot exceed a rate limit of a common father node. For example, assuming that a rate limit of a scheduler having a priority of 7 is required to not exceed 100Mb/s, and the scheduler having a priority of 7 corresponds to a branch node, in this case, when rate limits are allocated to the unicast queue and the multicast queue of respective leaf nodes under the branch node, a fixed rate limit is set for the unicast queue and the multicast queue respectively, and a sum of the rate limits of the two does not exceed 100Mb/s. For example, the maximum rate of the unicast queue is limited to 40Mb/s, and the maximum rate of the multicast queue is limited to 60Mb/s, in this way, such a problem may exist that when actual service traffic is transmitted, if the service traffic of the unicast queue is 30Mb/s, and the service traffic of the multicast queue is 70Mb/s, in accordance with the above rate limit solution, the service traffic of 30Mb/s of the unicast queue can pass completely and there still remains residue, however, with respect to the service traffic of 70Mb/s of the multicast queue, due to rate limit, merely service traffic of 60Mb/s can pass, and service traffic of 10Mb/s cannot pass, that is, the traffic is not sufficient. Therefore, it can be seen from an actual application that a total service traffic passed through the scheduler having a priority of 7 is merely 90Mb/s, which is obviously not a result expected by a user.

In the embodiments of the present invention, firstly, a scheduling structure of a cascading port is initialized, and a multi-level scheduling structure is established; and then, a rate limit is set for a father node of brother nodes required to limit rate according to the multi-level scheduling structure.

Herein, establishing a multi-level scheduling structure includes: establishing a multi-level scheduling structure including a root node, branch nodes and leaf nodes.

The method further includes: recording hardware indexes of the root node corresponding to the cascading port, the branch nodes and the leaf nodes respectively.

Correspondingly, setting a rate limit for a father node of brother nodes required to limit rate includes: setting a rate limit for a common upper-level branch node of brother leaf nodes required to limit rate according to the recorded hardware indexes of the root node corresponding to the cascading port, the branch nodes and the leaf nodes.

Setting a rate limit for the node includes: setting a rate limit for a hardware entry rate limit register of the node.

The implementation of a technical solution of the present disclosure is further described in detail below in combination with the drawings and the specific embodiments. As shown in Figure 1, a flow of a method for conducting rate limiting on a hierarchical quality of service queue provided by the embodiments of the present invention includes the following steps:

Step 101, initializing a scheduling structure of a cascading port, and establishing a multi-level scheduling structure.

Herein, the step of establishing a multi-level scheduling structure includes: establishing a multi-level scheduling structure including a root node, branch nodes and leaf nodes, where the root node, the branch nodes and the leaf nodes correspond to a hardware entry rate limit register respectively.

Specifically, in the multi-level scheduling structure of the embodiments of the present invention as shown in Figure 2, the cascading port corresponds to a root node (node R), there is one branch node L0 under the root node, and there are eight branch nodes L1 under the branch node L0. The eight branch nodes L1 correspond to eight priority schedulers, and there are two leaf nodes L2 under each of the branch nodes L1. One of the two leaf nodes L2 corresponds to a unicast queue (UC), and the other corresponds to a multicast queue (MC).

In the embodiments of the present invention, the above multi-level scheduling structure is merely taken as an example, in an actual application, an established multi-level scheduling structure is determined according to an actual network topology structure without limiting a scope of the multi-level scheduling structure shown in Fig. 2.

Herein, the method further includes: recording hardware indexes of the root node corresponding to the cascading port, the branch nodes and the leaf nodes respectively.

Specifically, hardware indexes of the root node (node R) corresponding to the cascading port, the node L0, the nodes L1 and the leaf nodes L2 can be recorded with a software table, and the hardware indexes are used for setting rate limits for each node subsequently and are queried during resource management of an MMU.

Step 102, setting a rate limit for a father node of brother nodes required to limit rate according to the multi-level scheduling structure.

Herein, the step of setting a rate limit for a father node of brother nodes required to limit rate includes: according to the multi-level scheduling structure and the recorded hardware indexes of the root node corresponding to the cascading port, the branch nodes and the leaf nodes, setting a rate limit for a common upper-level branch node, which is served as the father node, of brother leaf nodes required to limit rate.

Herein, the step of setting a rate limit for the node includes: setting a rate limit for a hardware entry rate limit register of the node.

Specifically, by querying the hardware indexes of the multi-level scheduling nodes recorded in the software table, a rate limit is set for a hardware entry rate limit register of the father node of the brother nodes required to limit rate. In the embodiments of the present invention, rate limit parameters of nodes L1 are set. Since both the unicast queue and the multicast queue corresponding to the leaf node L2 belong to the node L1, through setting the rate limit register of the node L1, a sum of traffic of the unicast queue and the multicast queue under the node L1 can be limited, but individual traffic of the unicast queue and individual traffic of the multicast queue are not limited.

Still taking a scheduler having rate limit of 100Mb/s as an example, it can be seen from an actual application that an implementation solution of the embodiments of the present invention will achieve a result expected by a user, that is, in the case that a sum of actual service traffic of all unicast queues and multicast queues under the scheduler does not exceed a rate limit value (100Mb/s) of a scheduler corresponding to a common upper-level branch node of the unicast queue and multicast queue, actual service traffic of each unicast queue or each multicast queue under the scheduler can reach a maximum value.

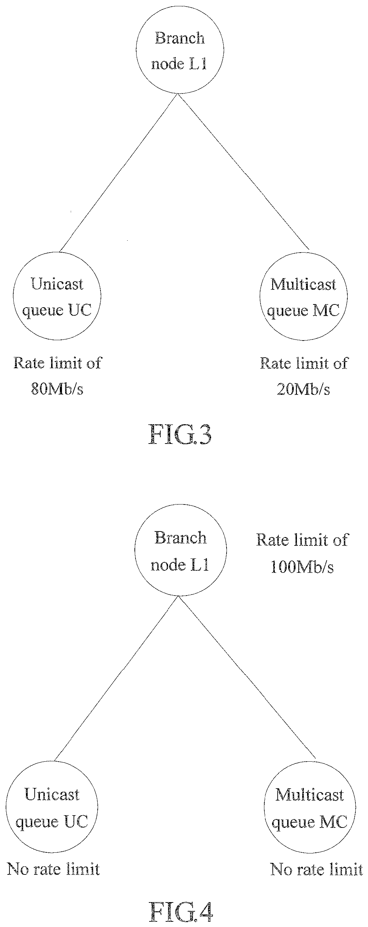

For a traditional existing solution, as shown in Figure 3, a rate limit is set for hardware entry rate limit registers of leaf nodes corresponding to a unicast queue and a multicast queue respectively, and the unicast queue and the multicast queue can only be limited to a fixed bandwidth value respectively, for example, a rate of the unicast queue is limited to 80Mb/s, and a rate of the multicast queue is limited to 20Mb/s. As a result, in an actual application, if traffic of the unicast queue is 90Mb/s and traffic of the multicast queue is 10Mb/s, merely traffic of 80 Mb/s of the unicast queue can pass, while traffic of 10Mb/s of the multicast queue can completely pass because rate limiting is conducted on the queues respectively. In this way, the effect of a common rate limit of 100Mb/s of the unicast queue and the multicast queue cannot be achieved, and an actual rate limit is 90Mb/s, so that the user experience will not achieve an expected effect certainly.

With the technical solution of the embodiments of the present invention, as shown in Fig. 4, rate limiting is conducted on the node L1, but rate limiting is not conducted on the unicast queue and the multicast queue of corresponding leaf node under the node L1. Still taking a certain scheduler having a rate limit of 100Mb/s as an example, in the case that the unicast queue transmits traffic of 90Mb/s and the multicast queue transmits traffic of 10Mb/s, since rate limiting is conducted on the common father node of the unicast queue and the multicast queue instead of conducting on the unicast queue and the multicast queue separately, in this way, the unicast service traffic of 90Mb/s can completely pass because it is less than a rate limit of 100Mb/s of the upper-level father node of the unicast queue, and the multicast service traffic of 10Mb/s can also pass because it is also less than a rate limit of 100Mb/s of the upper-level father node of the multicast queue. However, in the case that the unicast queue transmits traffic of 20Mb/s and the multicast queue transmits traffic of 80Mb/s, since both the unicast service traffic of 20Mb/s and the multicast service traffic of 80Mb/s are less than a rate limit of 100Mb/s of the upper-level father node of the unicast queue and the multicast queue, both of the two can completely pass. It can be seen from an actual application, actual service traffic of the unicast queue under the scheduler and actual service traffic of the multicast queue under the scheduler achieve maximum values while a sum of the two does not exceed a range of a rate limit of the scheduler corresponding to the common upper-level branch node of the unicast queue and the multicast queue.

Herein, when both service traffic of the unicast queue and the multicast queue of corresponding leaf node exceed the rate limit value of the scheduler corresponding to the father node of the leaf node, or a sum of service traffic of the unicast queue and the multicast queue exceeds the rate limit value of the scheduler corresponding to the father node of the leaf node, according to the situation of an actual application, priorities and/or proportions of service traffic of the unicast queue and the multicast queue can be preset.

For example, priorities corresponding to the unicast queue and the multicast queue are preset. When both service traffic of the unicast queue and service traffic of the multicast queue do not exceed the rate limit value of the scheduler corresponding to the father node of the unicast queue and the multicast queue, but a sum of service traffic of the unicast queue and the multicast queue exceeds the rate limit value of the scheduler corresponding to the father node of the unicast queue and the multicast queue, or both service traffic of the unicast queue and service traffic of the multicast queue exceed the rate limit value of the scheduler corresponding to the father node of the unicast queue and the multicast queue, rate limit setting is conducted according to the preset priority, for example, service traffic of the unicast queue is set to be prior to that of the multicast queue.

The proportions of service traffic of the unicast queue and the multicast queue can also be preset. When both service traffic of the unicast queue and service traffic of the multicast queue exceed the rate limit value of the scheduler corresponding to the father node of the unicast queue and the multicast queue, a rate limit can be set according to the preset proportions for which service traffic of the unicast queue and service traffic of the multicast queue account respectively.

Herein, when both service traffic of the unicast queue and service traffic of the multicast queue exceed the rate limit value of the scheduler corresponding to the father node of the unicast queue and the multicast queue, or a sum of service traffic of the unicast queue and the multicast queue exceeds the rate limit value of the scheduler corresponding to the father node of the unicast queue and the multicast queue, according to the situation of an actual application, priority sequences and/or proportions of the unicast queue and the multicast queue are preset without limiting a scope of a preset solution in the above embodiment. Any preset solution which can ensure that a sum of service traffic of the unicast queue and the multicast queue achieves a maximum value while the sum of service traffic of the unicast queue and the multicast queue does not exceed a rate limit of a scheduler corresponding to the father node of the unicast queue and the multicast queue, is desirable.

Embodiments of the present invention provide a computer storage medium storing a computer executable instructions that are used for executing the above method for conducting rate limiting on a hierarchical quality of service queue.

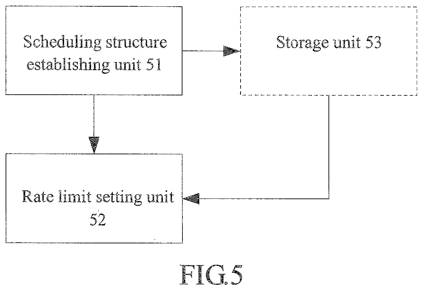

Embodiments of the present invention further provide an apparatus for conducting rate limiting on a hierarchical quality of service queue. As shown in Figure 5, the apparatus includes a scheduling structure establishing unit 51 and a rate limit setting unit 52.

The scheduling structure establishing unit 51 is configured to initialize a scheduling structure of a cascading port and establish a multi-level scheduling structure.

Herein, establishing a multi-level scheduling structure by the scheduling structure establishing unit 51 includes: establishing a multi-level scheduling structure including a root node, branch nodes and leaf nodes.

Specifically, in the multi-level scheduling structure established by the scheduling structure establishing unit 51 of the embodiments of the present invention as shown in Figure 2, the cascading port corresponds to the root node, there is one branch node L0 under the root node, and there are eight branch nodes L1 under the branch node L0. The eight branch nodes L1 correspond to eight priority schedulers, under each of the branch nodes L1, there are two leaf nodes L2, one of which corresponds to a unicast queue (UC), and the other corresponds to a multicast queue (MC).

The apparatus further includes: a storage unit 53 configured to record hardware indexes of the root node corresponding to the cascading port, the branch nodes and the leaf nodes respectively.

Specifically, the storage unit can record hardware indexes of the root node corresponding to the cascading port, the node L0, the nodes L1 and the leaf nodes L2 with a software table, and the hardware indexes are used for subsequently setting a rate limit for each node and are queried during resource management of an MMU.

The rate limit setting unit 52 is configured to set a rate limit for a father node of brother nodes required to limit rate according to the multi-level scheduling structure.

Setting a rate limit for a father node of brother nodes required to limit rate by the rate limit setting unit 52 includes: according to the multi-level scheduling structure and the recorded hardware indexes of the root node corresponding to the cascading port, the branch nodes and the leaf nodes, setting a rate limit for a common upper-level branch node of brother leaf nodes required to limit rate by the rate limit setting unit 52.

Herein, setting a rate limit for the node by the rate limit setting unit 52 include: setting a rate limit for a hardware entry rate limit register of the node by the rate limit setting unit 52.

Specifically, by querying the hardware indexes of the multi-level scheduling nodes recorded in the software table, the rate limit setting unit 52 sets a rate limit for a hardware entry rate limit register of the father node of the brother nodes required to limit rate. In the embodiments of the present invention, rate limit parameters of nodes L1 are set by the rate limit setting unit 52. Since both the unicast queue and the multicast queue corresponding to the leaf node L2 belong to the node L1, through setting the rate limit register of the node L1, a sum of traffic of the unicast queue and the multicast queue under the node L1 can be limited, but individual traffic of the unicast queue and individual traffic of the multicast queue are not limited.

Functions implemented by each processing unit in the apparatus for conducting rate limiting on a hierarchical quality of service queue shown in Figure 5 can be understood with reference to relevant description of the above method for conducting rate limiting on a hierarchical quality of service queue. Those skilled in the art should understand that: the functions of various processing units in the apparatus for conducting rate limiting on a hierarchical quality of service queue shown in Figure 5 can be realized through a program run on a processor, or can be realized through a specific logic circuit, for example, the functions can be realized through a central processing unit (CPU), a microprocessor unit (MPU), a digital signal processor (DSP) or a field programmable gate array (FPGA). The storage unit can also be realized by various memories or storage media.

In some embodiments provided in the present invention, it should be understood that the disclosed method and apparatus can be realized in other modes. The apparatus embodiment described above is only illustrative, for example, division of the units is only logical function division, and an additional division mode may exist during actual implementation, for example, a plurality of units or assemblies can be combined or can be integrated in another system, or a plurality of features can be omitted or cannot be executed. In addition, a communication connection between all presented or discussed components may be achieved by indirectly coupling or communicatively connecting a plurality of interfaces, devices or units, and may be in the form of an electrical connection, a mechanical electrical connection or other connections.

The above-mentioned units described as separated components may be or may not be separated physically, and components presented as units may be or may not be physical units, that is, the components can be located at one place or can be distributed on a plurality of network units. The purpose of the solution of this embodiment can be achieved by selecting some or all units according to actual needs.

In addition, each functional unit in various embodiments of the present invention can be integrated in a processing unit, each unit can be used as one unit individually, or two or more than two units can be integrated in one unit. The above-mentioned integrated unit can be realized in the form of hardware or can be realized in the form of a hardware and software function unit.

Those skilled in the art can understand that: all or some steps of implementing the above-mentioned method embodiments can be completed through hardware related to program instructions. The foregoing program can be stored in a computer readable storage medium. When the program is executed, the steps including the above-mentioned method embodiments are executed. However, the foregoing storage medium includes various media, such as a mobile storage device, a read-only memory (ROM), a magnetic disc or a compact disc, etc., which can store program coeds.

Alternatively, if implemented in the form of a software function module and sold or used as an independent product, the integrated unit in embodiments of the present invention can also be stored in a computer readable storage medium. Based on such understanding, a technical solution in embodiments of the present invention can be embodied in the form of a software product in essence or in a part of making a contribution to the existing art. The computer software product is stored in a storage medium, including several instructions causing a computer device (which may be a personal computer, a server or a network device, etc.) to execute all or a part of the methods of each embodiment of the present invention. However, the foregoing storage medium includes various media, such as a mobile storage device, a ROM, a magnetic disc or a compact disc, etc., which can store program codes.

The method and apparatus for conducting rate limiting on a hierarchical quality of service queue described in the disclosure only take the above-mentioned embodiments as examples, but are not limited to this. Those ordinary skilled in the art should understand that: the technical solution recorded in each of the foregoing embodiments can be still amended, or some or all technical features therein can be replaced equivalently.

The above only describes embodiments of the present invention and is not intended to limit a protection scope of the present disclosure.

## Claims

1. A method for conducting rate limiting on a hierarchical quality of service queue, wherein the method comprises:
initializing a scheduling structure of a cascading port and establishing a multi-level scheduling structure (101); and
setting a rate limit for a father node of two brother nodes required to limit rate according to the multi-level scheduling structure (102);
wherein one of the two brother nodes corresponds to a unicast queue, and the other one of the two brother nodes corresponds to a multicast queue.

2. The method according to claim 1, wherein the step of establishing a multi-level scheduling structure comprises: establishing a multi-level scheduling structure comprising a root node, branch nodes and leaf nodes.

3. The method according to claim 1, wherein the method further comprises: recording hardware indexes of a root node corresponding to the cascading port, branch nodes and leaf nodes respectively.

4. The method according to claim 3, wherein the step of setting a rate limit for a father node of two brother nodes required to limit rate comprises: according to the multi-level scheduling structure and the recorded hardware indexes of the root node corresponding to the cascading port, the branch nodes and the leaf nodes, setting the rate limit for the father node of the two brother nodes required to limit rate.

5. The method according to claim 1, wherein the step of setting a rate limit comprises: setting a rate limit for a hardware entry rate limit register of the father node.

6. An apparatus for conducting rate limiting on a hierarchical quality of service queue, wherein the apparatus comprises:
a scheduling structure establishing unit (51), configured to initialize a scheduling structure of a cascading port and establish a multi-level scheduling structure; and
a rate limit setting unit (52), configured to set a rate limit for a father node of two brother nodes required to limit rate according to the multi-level scheduling structure;
wherein one of the two brother nodes corresponds to a unicast queue, and the other one of the two brother nodes corresponds to a multicast queue.

7. The apparatus according to claim 6, wherein the scheduling structure establishing unit (51) is configured to establish a multi-level scheduling structure comprising a root node, branch nodes and leaf nodes.

8. The apparatus according to claim 6, wherein the apparatus further comprises a storage unit (53) configured to record hardware indexes of a root node corresponding to the cascading port, branch nodes and the leaf nodes respectively.

9. The apparatus according to claim 8, wherein the rate limit setting unit is further configured to:
according to the multi-level scheduling structure and the hardware indexes of the root node corresponding to the cascading port, the branch nodes and the leaf nodes which are recorded by the storage unit, set the rate limit for the father node of the two brother nodes required to limit rate.

10. The apparatus according to claim 6, wherein the rate limit setting unit (52) is configured to set a rate limit for a hardware entry rate limit register of the father node.

11. A computer storage medium storing computer executable instructions which, when executed by a computer, cause the computer to carry out the method of any one of claims 1 to 5.

## Patentansprüche

1. Verfahren zum Durchführen einer Ratenbegrenzung an einer hierarchischen Dienstqualitätswarteschlange, wobei das Verfahren Folgendes umfasst:
Initialisieren einer Scheduling-Struktur eines kaskadierenden Ports und Einrichten einer mehrstufigen Scheduling-Struktur (101); und
Festlegen einer Ratenbegrenzung für einen Vaterknoten von zwei Bruderknoten, die die Rate begrenzen müssen, gemäß der mehrstufigen Scheduling-Struktur (102);
wobei einer der zwei Bruderknoten einer Unicast-Warteschlange entspricht und der andere der zwei Bruderknoten einer Multicast-Warteschlange entspricht.

2. Verfahren nach Anspruch 1, wobei der Schritt des Einrichtens einer mehrstufigen Scheduling-Struktur Folgendes umfasst: Einrichten einer mehrstufigen Scheduling-Struktur, die einen Wurzelknoten, Zweigknoten und Blattknoten umfasst.

3. Verfahren nach Anspruch 1, wobei das Verfahren ferner Folgendes umfasst: Aufzeichnen von Hardwareindizes eines Wurzelknotens, der dem kaskadierenden Port, den Zweigknoten bzw. den Blattknoten entspricht.

4. Verfahren nach Anspruch 3, wobei der Schritt des Festlegens einer Ratenbegrenzung für einen Vaterknoten von zwei Bruderknoten, die die Rate begrenzen müssen, Folgendes umfasst: gemäß der mehrstufigen Scheduling-Struktur und den aufgezeichneten Hardwareindizes des Wurzelknotens, der dem kaskadierenden Port, den Zweigknoten und den Blattknoten entspricht, Festlegen der Ratenbegrenzung für den Vaterknoten der zwei Bruderknoten, die die Rate begrenzen müssen.

5. Verfahren nach Anspruch 1, wobei der Schritt des Festlegens einer Ratenbegrenzung Folgendes umfasst: Festlegen einer Ratenbegrenzung für ein Hardwareeingangsratenbegrenzungsregister des Vaterknotens.

6. Vorrichtung zum Durchführen einer Ratenbegrenzung an einer hierarchischen Dienstqualitätswarteschlange, wobei die Vorrichtung Folgendes umfasst:
eine Scheduling-Struktur-Einrichtungseinheit (51), die zum Initialisieren einer Scheduling-Struktur eines kaskadierenden Ports und Einrichten einer mehrstufigen Scheduling-Struktur konfiguriert ist; und
eine Ratenbegrenzungs-Festlegungseinheit (52), die zum Festlegen einer Ratenbegrenzung für einen Vaterknoten von zwei Bruderknoten, die die Rate begrenzen müssen, gemäß der mehrstufigen Scheduling-Struktur, konfiguriert ist;
wobei einer der zwei Bruderknoten einer Unicast-Warteschlange entspricht und der andere der zwei Bruderknoten einer Multicast-Warteschlange entspricht.

7. Vorrichtung nach Anspruch 6, wobei die Scheduling-Struktur-Einrichtungseinheit (51) zum Einrichten einer mehrstufigen Scheduling-Struktur, die einen Wurzelknoten, Zweigknoten und Blattknoten umfasst, konfiguriert ist.

8. Vorrichtung nach Anspruch 6, wobei die Vorrichtung ferner eine Speichereinheit (53) umfasst, die zum Aufzeichnen von Hardwareindizes eines Wurzelknotens, der dem kaskadierenden Port, den Zweigknoten bzw. den Blattknoten entspricht, konfiguriert ist.

9. Vorrichtung nach Anspruch 8, wobei die Ratenbegrenzungs-Festlegungseinheit ferner zu Folgendem konfiguriert ist:
gemäß der mehrstufigen Scheduling-Struktur und den aufgezeichneten Hardwareindizes des Wurzelknotens, der dem kaskadierenden Port, den Zweigknoten und den Blattknoten entspricht, die durch die Speichereinheit aufgezeichnet werden, Festlegen der Ratenbegrenzung für den Vaterknoten der zwei Bruderknoten, die die Rate begrenzen müssen.

10. Vorrichtung nach Anspruch 6, wobei die Ratenbegrenzungs-Festlegungseinheit (52) zum Festlegen einer Ratenbegrenzung für ein Hardwareeingangsratenbegrenzungsregister des Vaterknotens konfiguriert ist.

11. Computerspeichermedium, das computerausführbare Anweisungen speichert, die bei Ausführung durch einen Computer den Computer dazu veranlassen, das Verfahren nach einem der Ansprüche 1 bis 5 auszuführen.

## Revendications

1. Procédé pour effectuer une limitation de débit sur une file d'attente à qualité de service hiérarchique, dans lequel le procédé comprend :
l'initialisation d'une structure de planification d'un port en cascade et l'établissement d'une structure de planification multi-niveaux (101) ; et
la définition d'une limite de débit pour un nœud père de deux nœuds frères requis pour limiter un débit conformément à la structure de planification multi-niveaux (102) ;
dans lequel l'un des deux nœuds frères correspond à une file d'attente de monodiffusion, et l'autre des deux nœuds frères correspond à une file d'attente de multidiffusion.

2. Procédé selon la revendication 1, dans lequel l'étape d'établissement d'une structure de planification multi-niveaux comprend : l'établissement d'une structure de planification multi-niveaux comprenant un nœud racine, des nœuds de branche et des nœuds de feuille.

3. Procédé selon la revendication 1, dans lequel le procédé comprend en outre : l'enregistrement d'index de matériel d'un nœud racine correspondant respectivement au port en cascade, aux nœuds de branche et aux nœuds de feuille.

4. Procédé selon la revendication 3, dans lequel l'étape de définition d'une limite de débit pour un nœud père de deux nœuds frères requis pour limiter un débit comprend : conformément à la structure de planification multi-niveaux et aux index de matériel enregistrés du nœud racine correspondant au port en cascade, aux nœuds de branche et aux nœuds de feuille, la définition de la limite de débit pour le nœud père des deux nœuds frères requis pour limiter un débit.

5. Procédé selon la revendication 1, dans lequel l'étape de définition d'une limite de débit comprend : la définition d'une limite de débit pour un registre de limite de débit d'entrée de matériel du nœud père.

6. Appareil pour effectuer une limitation de débit sur une file d'attente à qualité de service hiérarchique, dans lequel l'appareil comprend :
une unité d'établissement de structure de planification (51), configurée pour initialiser une structure de planification d'un port en cascade et établir une structure de planification multi-niveaux ; et
une unité de définition de limite de débit (52), configurée pour définir une limite de débit pour un nœud père de deux nœuds frères requis pour limiter un débit conformément à la structure de planification multi-niveaux ;
dans lequel l'un des deux nœuds frères correspond à une file d'attente de monodiffusion, et l'autre des deux nœuds frères correspond à une file d'attente de multidiffusion.

7. Appareil selon la revendication 6, dans lequel l'unité d'établissement de structure de planification (51) est configurée pour établir une structure de planification multi-niveaux comprenant un nœud racine, des nœuds de branche et des nœuds de feuille.

8. Appareil selon la revendication 6, dans lequel l'appareil comprend en outre une unité de stockage (53) configurée pour enregistrer des index de matériel d'un nœud racine correspondant respectivement au port en cascade, aux nœuds de branche et aux nœuds de feuille.

9. Appareil selon la revendication 8, dans lequel l'unité de définition de limite de débit est en outre configuré pour :
conformément à la structure de planification multi-niveaux et aux index de matériel du nœud racine correspondant au port en cascade, aux nœuds de branche et aux nœuds de feuille qui sont enregistrés par l'unité de stockage, définir la limite de débit pour le nœud père des deux nœuds frères requis pour limiter un débit.

10. Appareil selon la revendication 6, dans lequel l'unité de définition d'une limite de débit (52) est configurée pour définir une limite de débit pour un registre de limite de débit d'entrée de matériel du nœud père.

11. Support de stockage informatique stockant des instructions exécutables par ordinateur qui, lorsqu'elles sont exécutées par un ordinateur, amènent l'ordinateur à exécuter le procédé selon l'une quelconque des revendications 1 à 5.
